# EUROPEAN PATENT APPLICATION

(11) **EP 3 015 890 A1**
(43) Date of publication of application: **04.05.2016**
(21) Application number: 14190498.7
(22) Date of filing: 27.10.2014
(51) Int. Cl.: G02B 6/44

(54) **Bottom tray assembly for a fiber optic distribution device**

(71) Applicant: CCS Technology, Inc., Wilmington, DE 19803 (US)
(72) Inventor: Müller, Michael, 58706 Menden (DE); Müller, Thorsten, 58708 Menden (DE); Schreiber, Sebastian, 13055 Berlin (DE); Malolepszy, Bartosz, 92-508 Lodz (PL); Strunck, Sven, 13129 Berlin (DE); Sek, Grzegorz, 91-849 Lodz (PL); Kreczmer, Wojciech, 91-848 Lodz (PL); Ruda, Michal, 93-377 Lodz (PL)
(74) Representative: Sturm, Christoph

(57) **Abstract**

Bottom tray assembly (13) for a fiber optic distribution device, comprising a first, lower bottom tray (14) for guiding fiber optic cables and a second, upper bottom tray (15) for guiding fiber optic cables. The first bottom tray (14) and the second bottom tray (15) are both mountable to a housing of the fiber optic distribution device in such a way that the relative position between the first bottom tray (14) and the second bottom tray (15) is fixed. The first bottom tray (14) comprises a horizontally oriented bottom wall (16) and at least two vertically oriented walls (17, 18, 19) running parallel or almost parallel to each other, wherein a first vertically oriented wall (17) of said vertically oriented walls provides a front wall of the first bottom tray (14), wherein the first vertically oriented wall (17) of said vertically oriented walls and the bottom wall (16) define together an interior space (20) of the first bottom tray (14) for the handling of fiber optic cables; wherein a second vertically oriented wall (18) of said vertically oriented walls divides said interior space (20) into a first subspace (20a) being positioned behind the first vertically oriented wall (17) and in front of the second vertically oriented wall (18), and a second subspace (20b) being positioned behind the second vertically oriented wall (18) and below the second, upper bottom tray (15).

## Description

The present patent application relates to a bottom tray assembly for a fiber optic distribution device and to a fiber optic distribution device having such a bottom tray assembly.

When constructing fiber optic cable networks, fiber optic distribution devices are required for ensuring structured wiring of the fiber optic cables. The product catalogue "Accessories for Fiber Optic Networks, Edition 1, Corning Cable Systems, Page 150, Year 2001" discloses a fiber optic distribution device in the form of a distribution cabinet, wherein the distribution cabinet comprises a housing and fiber optic modules positioned inside the housing. The housing comprises vertically and horizontally running struts to which the fiber optic modules are mounted. A bottom tray assembly is mounted to the lower section of the housing, wherein the bottom tray assembly serves to guide fiber optic cables into the fiber optic distribution device and out of the fiber optic distribution device. The fiber optic modules handle junction points between fiber optic cables, wherein the fiber optic modules can be provided by patch modules and/or splice modules.

US 7,142,763 B2 discloses another fiber optic distribution device comprising a housing and a bottom tray assembly mounted to a lower section of the housing. The bottom tray assembly disclosed by US 7,142,763 B2 comprises a first, lower bottom tray for guiding fiber optic cables and a second, upper bottom tray for guiding fiber optic cables. The first bottom tray is mounted to stationary struts of housing. The second bottom tray is mounted to struts of a pivotable frame of the housing which can be pivoted relative to the stationary struts of the housing. In this way the second bottom tray is pivotable relative to the first bottom tray. With the growing demand for bandwidth the number of fiber optic cables to be handled either within one fiber optic distribution device or within a system of fiber optic distribution devices having several of such fiber optic distribution devices increases. It is necessary to allow the easy, secure and visibly manageable handling of a high density of fiber optic cables. There is a need for new solutions meeting these requirements.

The present application is based on the object to provide a novel bottom tray assembly for a fiber optic distribution device and a novel fiber optic distribution device comprising such a bottom tray assembly.

The bottom tray assembly according to the present patent application is defined in claim 1. The first bottom tray of the bottom tray assembly and the second bottom tray of the bottom tray assembly are both mountable to a housing of the fiber optic distribution device in such a way that the relative position between the first bottom tray and the second bottom tray is fixed. The first bottom tray of the bottom tray assembly comprises a horizontally oriented bottom wall and at least two vertically oriented walls running parallel or almost parallel to each other. A first vertically oriented wall of said vertically oriented walls provides a front wall of the first bottom tray. The first vertically oriented wall of said vertically oriented walls and the bottom wall define together an interior space of the first bottom tray for the handling of fiber optic cables. The second vertically oriented wall of said vertically oriented walls divides said interior space into a first subspace and a second subspace. The first subspace is positioned behind the first vertically oriented wall and in front of the second vertically oriented wall. The second subspace is positioned behind the second vertically oriented wall and partially below the second, upper bottom tray.

The bottom tray assembly allows an easy, secure and visibly manageable handling of a high density of fiber optic cables, namely within a fiber optic distribution device comprising the bottom tray assembly and within a system of fiber optic distribution devices each comprising such a bottom tray assembly.

According to preferred further development, the second vertically oriented wall of the first bottom tray comprises cutouts for guiding fiber optic cables between the first subspace and the second subspace of the first bottom tray. This allows a further improved handling of a high density of fiber optic cables.

According to preferred further development, the first bottom tray of the bottom tray assembly comprises a third vertically oriented wall running parallel or almost parallel to first and second vertically oriented walls, wherein the third vertically oriented wall provides a back wall of the first bottom tray, wherein the second subspace is positioned behind the second vertically oriented wall and in front of the third vertically oriented wall and partially below the second, upper bottom tray. Preferably, the third vertically oriented wall of the first bottom tray comprises cutouts for guiding fiber optic cables between fiber optic distribution devices being positioned in a back-to-back arrangement. This allows a further improved handling of a high density of fiber optic cables.

According to preferred further development, separators are positioned with the second subspace of the first bottom tray, the separators providing guiding elements for the fiber optic cables. This allows a further improved handling of a high density of fiber optic cables.

According to preferred further development, the second bottom tray of the bottom tray assembly comprises a horizontally oriented bottom wall, at a first side of the bottom wall an upwardly directed wall section for guiding fiber optic cables from the second bottom tray to fiber optic modules of the fiber optic distribution device comprising the bottom tray assembly, and at an opposite second side of the bottom wall a downwardly directed wall section for guiding fiber optic cables from the second bottom tray to the second subspace of the first bottom tray. This allows a further improved handling of a high density of fiber optic cables.

The present application further relates to fiber optic distribution device having such a bottom tray assembly.

Embodiments of the bottom tray assembly and fiber optic distribution device are given in the dependent claims and the description below. Exemplary embodiments will be explained in more detail with reference to the drawing, in which:
- Figure 1: shows a perspective view of a bottom tray assembly having a first bottom tray and a second bottom tray;
- Figure 2: shows a perspective view of the bottom tray assembly of Figure 1 mounted in a lower housing section of a fiber optic distribution device;
- Figure 3: shows the arrangement of Figure 2 together with a fiber optic cable but with a removed front wall of the first bottom tray;
- Figure 4: shows the arrangement of Figure 3 with a differently guided fiber optic cable;
- Figure 5: shows the arrangement of Figure 3 with a differently guided fiber optic cable;
- Figure 6: shows the arrangement of Figure 3 with a differently guided fiber optic cable;
- Figure 7: shows the arrangement of Figure 3 with a differently guided fiber optic cable;
- Figure 8: shows the arrangement of Figure 3 with a differently guided fiber optic cable;
- Figure 9: shows a first perspective view of two bottom tray assemblies of two fiber optic distribution devices mounted side-by side;
- Figure 10: shows a second perspective view of the arrangement of Figure 9; and
- Figure 11: shows a perspective view of four bottom tray assemblies of four fiber optic distribution device mounted side-by side.

The present patent application relates to bottom tray assembly for a fiber optic distribution device and to a fiber optic distribution device having such a bottom tray assembly.

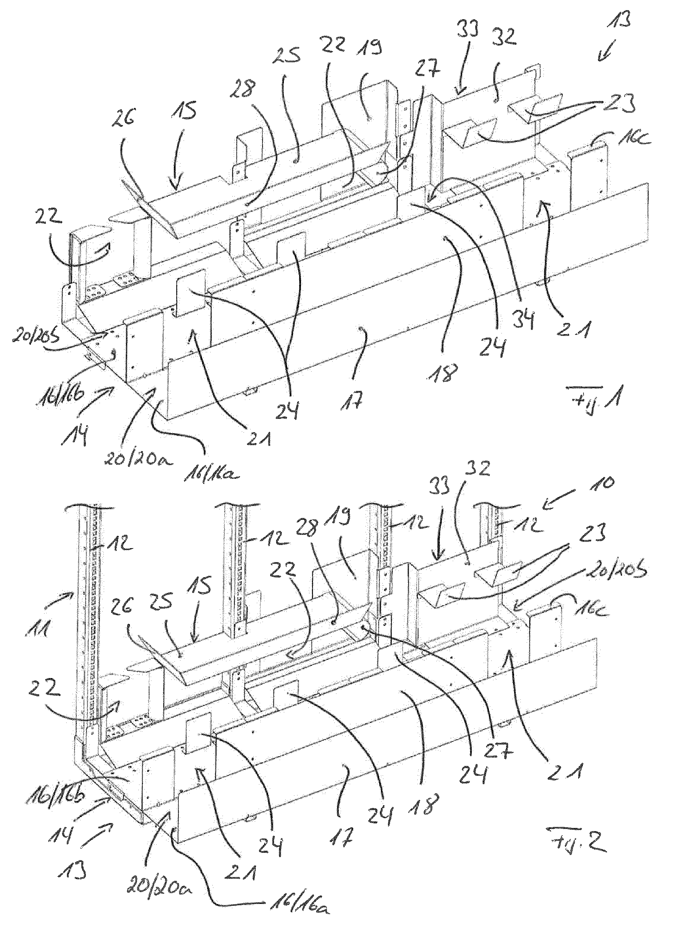

Figure 1 shows bottom tray assembly 13 and Figure 2 shows a lower section of a fiber optic distribution device 10, namely a lower section of a housing 11 of the fiber optic distribution device 10, comprising the bottom tray assembly 13 of Figure 1.

The housing 11 of the fiber optic distribution device 10 comprises struts 12 to which the fiber optic modules (not shown) are mounted. The fiber optic modules (not shown) handle junction points between fiber optic cables, wherein the fiber optic modules can be provided by patch modules and/or splice modules.

The fiber optic distribution device 10 comprises the bottom tray assembly 13 positioned in a lower region of the housing 11 below the fiber optic modules (not shown). The bottom tray assembly 13 is mounted to the struts 12 of the housing 11.

The bottom tray assembly 13 comprises a first, lower bottom tray 14 for guiding fiber optic cables and a second, upper bottom tray 15 for guiding fiber optic cables.

The first bottom tray 14 of the bottom tray assembly 13 and the second bottom tray 15 of the bottom tray assembly 13 are both mounted to the housing 11 of the fiber optic distribution device 10, namely to the struts 12 of the housing 11, in such a way that the relative position between the first bottom tray 14 and the second bottom tray 15 is fixed.

The first bottom tray 14 of the bottom tray assembly 13 comprises a horizontally oriented bottom wall 16 and vertically oriented walls 17, 18, 19 running parallel to each other.

The first vertically oriented wall 17 of said vertically oriented walls 17, 18, 19 of the first bottom tray 14 provides a front wall of the first bottom tray 14. Said first vertically oriented wall 17 of the first bottom tray 14 and the bottom wall 16 of the first bottom tray 14 define together an interior space 20 of the first bottom tray 14 for the handling of fiber optic cables.

The second vertically oriented wall 18 of said vertically oriented walls 17, 18, 19 divides said interior space 20 into a first subspace 20a and a second subspace 20b. The first subspace 20a is positioned behind of the first vertically oriented wall 17 and in front of the second vertically oriented wall 18. The second subspace 20b is positioned behind of the second vertically oriented wall 18 and partially below the second, upper bottom tray 15.

The first bottom tray 14 of the bottom tray assembly 13 comprises further the third vertically oriented wall 19 running parallel or almost parallel to first and second vertically oriented walls 17, 18.

The third vertically oriented wall 19 of said vertically oriented walls 17, 18, 19 provides a back wall of the first bottom tray 14, wherein the second subspace 20b is positioned behind of the second vertically oriented wall 18 and in front of the third vertically oriented wall 19 and partially below the second, upper bottom tray 15.

The bottom wall 16 of the first bottom tray 14 of the bottom tray assembly 13 is provided by several bottom wall segments 16a, 16b.

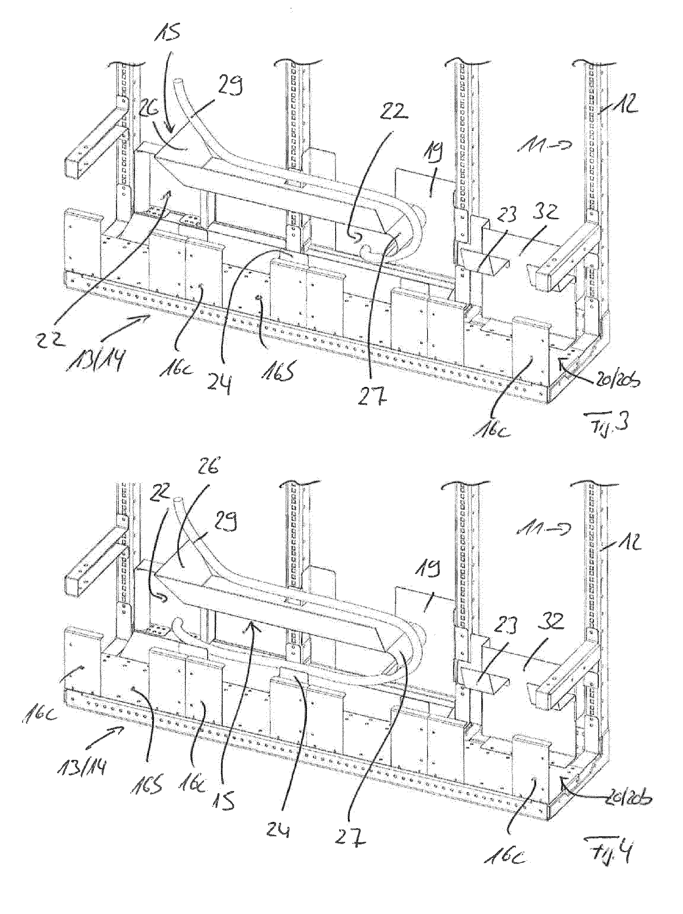

A first bottom wall segment 16a is positioned between to the first vertically oriented wall 17 and the second vertically oriented wall 18 and delimits the first subspace 20a of the interior space 20 of the first bottom tray 14. In Figures 3 to 8 the first bottom wall segment 16a, the first vertically oriented wall 17 and the second vertically oriented wall 18 are removed.

Second bottom wall segments 16b are positioned between the second vertically oriented wall 18 and the third vertically oriented wall 19 and delimit the second subspace 20b of the interior space 20 of the first bottom tray 14. Mounting struts 16c extend from the second bottom wall segments 16b to which the second vertically oriented wall 18 is mounted.

The second vertically oriented wall 18 of said vertically oriented walls 17, 18, 19 of the bottom tray assembly 13 comprises cutouts 21 for guiding fiber optic cables between the first subspace 20a and the second subspace 20b of the first bottom tray 14.

The third vertically oriented wall 19 of said vertically oriented walls 17, 18, 19 of the bottom tray assembly 13 comprises cutouts 22 for guiding fiber optic cables between fiber optic distribution devices being positioned in a back-to-back arrangement.

Guiding elements 23 for fiber optic cables are mounted to the third vertically oriented wall 19, namely laterally next to and below the second, upper bottom tray 14. In the embodiment shown, two such guiding elements 23 are mounted to the third vertically oriented wall 19 serving as back wall of the bottom tray assembly 13, each of the same laterally next to and below the second, upper bottom tray 14.

The guiding elements 23 are mounted to a section 32 of the third vertically oriented wall 19 that defines at the back of the same a guiding channel 33 for incoming or outgoing fiber optic cables may be fed through a cutout 34 in the bottom wall 16 of the first bottom tray 14.

Strain relief elements may be provided at the back of the section 32 of the third vertically oriented wall 19 providing strain relief for the cables that are fed through the cutout 34 in the bottom wall 16 of the first bottom tray 14. Separators 24 are positioned with the second subspace 20b of the first bottom tray 14, wherein the separators 24 provide further guiding elements for the fiber optic cables. The separators 24 are mounted to the bottom wall 16 of the bottom tray assembly 13. The mounting position of the separators 24 at the bottom wall 16 of the bottom tray assembly 13 is freely adjustable.

The second bottom tray 15 of the bottom tray assembly 13 which is positioned above the first bottom tray 14 of the bottom tray assembly 13 comprises a horizontally oriented bottom wall 25.

At a first side of the bottom wall 25 the same comprises an upwardly directed wall section 26 for guiding fiber optic cables from the second bottom tray 15 to the fiber optic modules of the fiber optic distribution device.

At an opposite second side of the bottom wall 15 the same comprises a downwardly directed wall section 27 for guiding fiber optic cables from the second bottom tray 15 to the second subspace 20b of the first bottom tray 14. The downwardly directed wall section 27 is bent by almost 180° allowing a U-turn of a fiber optic cable to be guided around that wall section 27 such that the fiber optic cable may route in opposite or almost opposite directions. The bottom wall 25 of the second bottom tray 15 comprises at the front an upwardly directed wall section 28.

The bottom tray assembly 13 according to the present application allows an easy, secure and visibly manageable handling of a high density of fiber optic cables, namely within a fiber optic distribution device 10 comprising the bottom tray assembly 13 and within a system of fiber optic distribution devices 10 each comprising such a bottom tray assembly 13.

The bottom tray assembly 13 according to the present application provides a modular bottom tray assembly for easy, secure and visibly manageable handling of incoming and outgoing fiber optic cables, namely incoming and outgoing fiber optic patchcords in fiber optic distribution devices.

The bottom tray assembly 13 according to the present application is flexible and can work with different configurations and sizes of fiber optic distribution devices 10.

Figures 3 to 8 each shows the bottom tray assembly 13 of Figures 1 and 2 together with a section of a fiber optic cable 29, wherein the first bottom wall segment 16a, the first vertically oriented wall 17 and the second vertically oriented wall 18 are removed.

The fiber optic cable 29 is according to Figures 3 to 8 guided with a first portion upwards to the fiber optic modules (not shown) mounted at the housing 11, namely along the upwardly directed wall section 26 of the bottom wall 25 of the second bottom tray 15.

In Figures 3 to 6 the fiber optic cable 29 is with a second portion guided downwards along the downwardly directed wall section 27 of the bottom wall 25, namely downwards from the second bottom tray 15 to the second subspace 20b of the first bottom tray 14 making a U-turn at the downwardly directed wall section 27 such that the fiber optic cable may route in opposite or almost opposite directions.

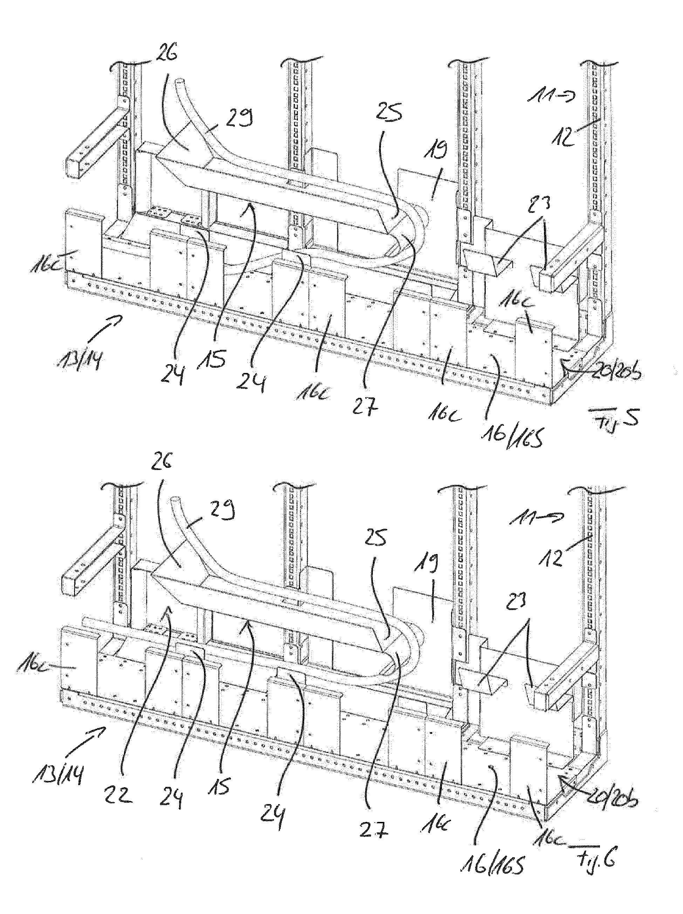

Said fiber cable 29 is then in Figures 3 and 4 guided through one of the cutouts 22 in the back wall 19 of the first bottom tray 14 to another fiber optic distribution device (not shown) mounted back-to-back with the shown fiber optic distribution device 10, wherein said the fiber cable 29 is in Figures 5 and 6 guided within the second subspace 20b to the one side of the bottom tray 14 in the direction of another fiber optic distribution device (not shown) mounted side-by-side with the shown fiber optic distribution device 10, namely at the left hand side of the shown fiber optic distribution device 10.

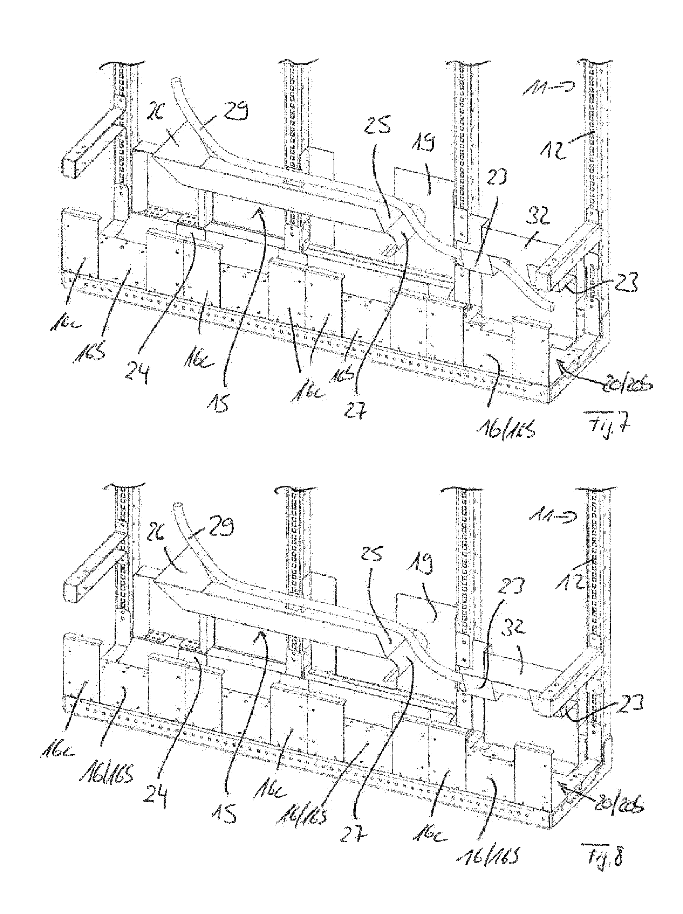

In Figures 7 and 8 the fiber cable 29 does not make a U-turn at the downwardly directed wall section 27 but is guided at the guiding elements 32 to another fiber optic distribution device (not shown) mounted side-by-side with the shown fiber optic distribution device 10, namely at the right hand side of the shown fiber optic distribution device 10.

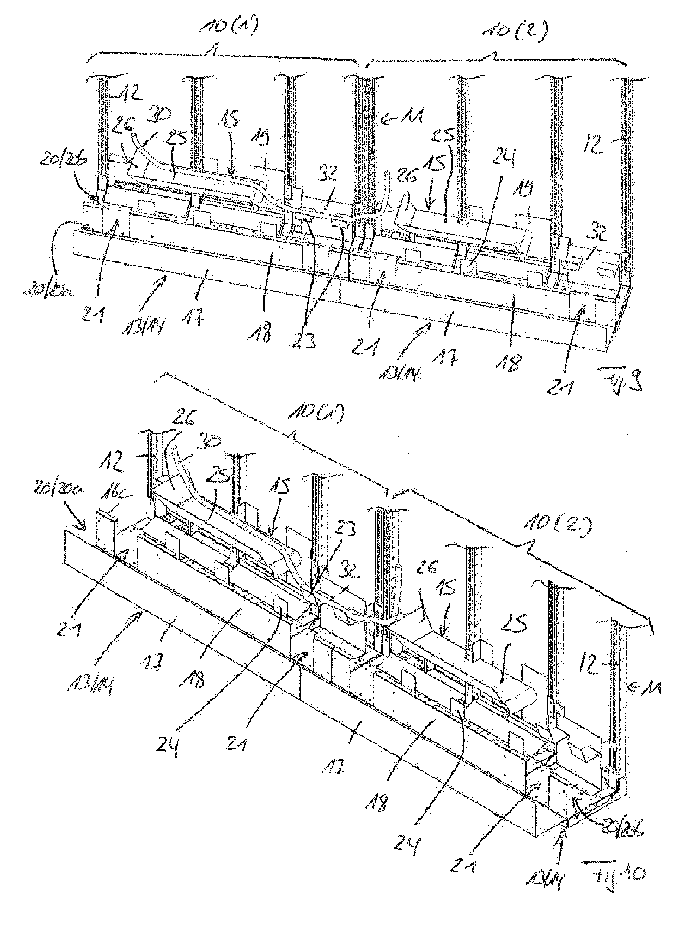

Figures 9 and 10 both show two fiber optic distribution devices. First and second fiber optic distribution devices 10(1) and 10(2), respectively, are shown mounted side-by-side each having the bottom tray assembly 13 of Figure 1 together with a section of a fiber optic cable 30.

The fiber optic cable 30 is according to Figures 9 and 10 guided with one portion upwards to the fiber optic modules (not shown) mounted at the housing 11 of the first fiber optic distribution device 10(1), namely along the upwardly directed wall section 26 of the bottom wall 25 of the second bottom tray 15 of said first fiber optic distribution device 10(1).

With another portion the fiber optic cable 30 is guided upwards to the fiber optic modules (not shown) mounted at the housing 11 of the second fiber optic distribution devices 10(2). Between said portions the fiber optic cable 30 is guided at the guiding elements 23 of the first fiber optic distribution device 10(1).

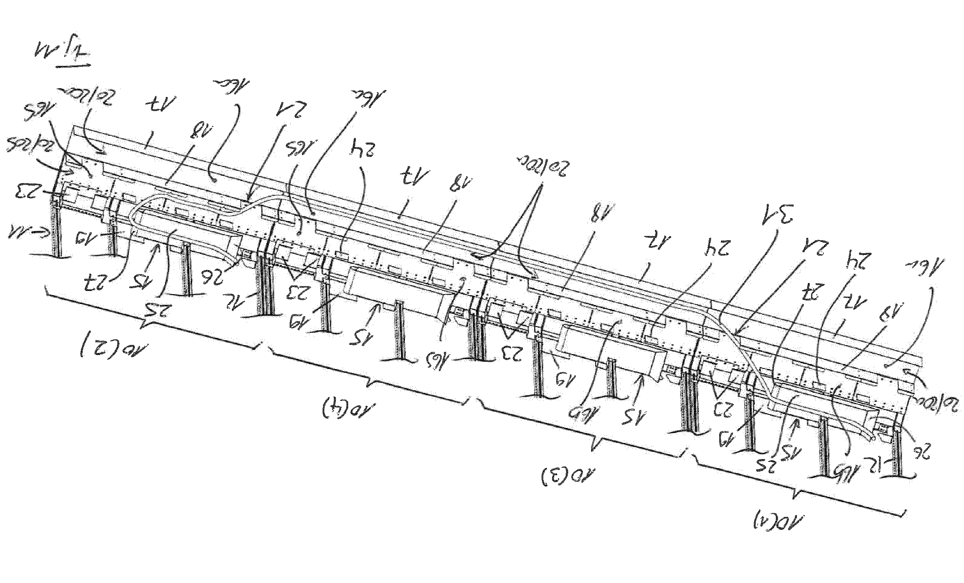

Figure 11 shows four fiber optic distribution devices 10(1), 10(2), 10(3), 10(4) mounted side-by-side each having the bottom tray assembly 13 of Figure 1 together with a section of a fiber optic cable 31.

The fiber optic cable 31 is according to Figure 11 guided with one portion upwards to the fiber optic modules (not shown) mounted at the housing 11 of the first fiber optic distribution device 10(1), namely along the upwardly directed wall section 26 of the bottom wall 25 of the second bottom tray 15 of said first fiber optic distribution device 10(1).

With anther portion the fiber optic cable 31 is guided upwards to the fiber optic modules (not shown) mounted at the housing 11 of the second fiber optic distribution devices 10(2), namely along the upwardly directed wall section 26 of the bottom wall 25 of the second bottom tray 15 of said second fiber optic distribution device 10(2). The fiber optic cable 31 makes a U-turn at the downwardly directed wall section 27 of the bottom wall 25 of the second bottom tray 15 of said second fiber optic distribution device 10 (2).

Between the first fiber optic distribution device 10(1) and the second fiber optic distribution device 10(2) there are positioned two further fiber optic distribution device 10(3), 10(4). The fiber optic cable 31 is guided with the first fiber optic distribution device 10(1) and within the second fiber optic distribution device 10(2) from the respective second bottom tray 15 into the second subspace 20b of the respective first bottom tray 14, from the second subspace 20b of the respective first bottom tray 14 into the first subspace 20a of the respective first bottom tray 14, and in the region of the two further fiber optic distribution device 10(3) and 10(4) that are positioned between the first fiber optic distribution device 10(1) and the second fiber optic distribution device 10(2) within the first subspaces 20a of the respective first bottom trays 14.

These first subspaces 20a of the respective first bottom trays 14 of the two further fiber optic distribution devices 10(3), 10(4) that are positioned between the first fiber optic distribution device 10(1) and the second fiber optic distribution device 10(2) serve as express feed-through channels for guiding fiber optic cables from the first fiber optic distribution device 10(1) to the second fiber optic distribution device 10(2) without access to fiber optic modules of the fiber optic distribution devices 10(3) and 10(4) being positioned between the first fiber optic distribution device 10(1) and the second fiber optic distribution device 10(2).

### List of reference numerals

- 10: fiber optic distribution device
- 11: housing
- 12: strut
- 13: bottom tray assembly
- 14: first bottom tray
- 15: second bottom tray
- 16: bottom wall
- 16a: bottom wall segment
- 16b: bottom wall segment
- 16c: mounting strut
- 17: wall
- 18: wall
- 19: wall
- 20: interior space
- 20a: first subspace
- 20b: second subspace
- 21: cutout
- 22: cutout
- 23: guiding element
- 24: separator
- 25: bottom wall
- 26: wall section
- 27: wall section
- 28: wall section
- 29: fiber optic cable
- 30: fiber optic cable
- 31: fiber optic cable
- 32: section
- 33: guiding channel
- 34: cutout

## Claims

1. A bottom tray assembly (13) for a fiber optic distribution device (10), the bottom tray assembly (13) comprising
a first, lower bottom tray (14) for guiding fiber optic cables;
a second, upper bottom tray (15) for guiding fiber optic cables;
**characterized in that**
the first bottom tray (14) and the second bottom tray (15) are both mountable to a housing (11) of the fiber optic distribution device (10) in such a way that the relative position between the first bottom tray (14) and the second bottom tray (15) is fixed;
the first bottom tray (14) comprises a horizontally oriented bottom wall (16) and at least two vertically oriented walls (17, 18, 19) running parallel or almost parallel to each other,
wherein a first vertically oriented wall (17) of said vertically oriented walls provides a front wall of the first bottom tray (14),
wherein the first vertically oriented wall (17) of said vertically oriented walls and the bottom wall (16) define together an interior space (20) of the first bottom tray (14) for the handling of fiber optic cables;
wherein a second vertically oriented wall (18) of said vertically oriented walls divides said interior space (20) into
a first subspace (20a) being positioned behind the first vertically oriented wall (17) and in front of the second vertically oriented wall (18), and
a second subspace (20b) being positioned behind the second vertically oriented wall (18) and below the second, upper bottom tray (15).

2. The bottom tray assembly of claim 1, **characterized in that** the second vertically oriented wall (18) comprises cutouts (21) for guiding fiber optic cables between the first subspace (20a) and the second subspace (20b) of the first bottom tray (14).

3. The bottom tray assembly of claim 1 or 2, **characterized in that** the first subspace (20a) of the first bottom tray (14) serves as an express feed-through channel for guiding fiber optic cables from a first fiber optic distribution device to a second fiber optic distribution device without access to fiber optic modules of the fiber optic distribution device comprising the bottom tray assembly.

4. The bottom tray assembly of one of claims 1 to 3, **characterized in that** the first bottom tray (14) comprises a third vertically oriented wall (19) running parallel or almost parallel to first and second vertically oriented walls (17, 18), wherein the third vertically oriented wall (19 provides a back wall of the first bottom tray (14), wherein the second subspace (20b) is positioned behind the second vertically oriented wall (18) and in front of the third vertically oriented wall (19) and below the second, upper bottom tray (15).

5. The bottom tray assembly of claim 4, **characterized in that** the third vertically oriented wall (19) comprises cutouts (22) for guiding fiber optic cables between fiber optic distribution devices being positioned in a back-to-back arrangement.

6. The bottom tray assembly of claim 4 or 5, **characterized by** guiding elements (23) mounted to a section (32) of the third vertically oriented wall (19), namely laterally to the second, upper bottom tray (15).

7. The bottom tray assembly of claim 6, **characterized in that** the guiding elements (23) are positioned laterally to and below the second, upper bottom tray (15).

8. The bottom tray assembly of claim 6 or 7, **characterized in that** the section (32) of the third vertically oriented wall (19) to which the guiding elements (23) defines at the back of the same a guiding channel (33) for incoming or outgoing fiber optic cables feed through a cutout (34) in the bottom wall (16) of the first bottom tray (14).

9. The bottom tray assembly of one of claims 1 to 8, **characterized by** separators (24) being positioned with the second subspace (20b) of the first bottom tray (14), the separators (24) providing guiding elements for the fiber optic cables.

10. The bottom tray assembly of one of claims 1 to 9, **characterized in that** the second bottom tray (15) comprises a horizontally oriented bottom wall (25), at a first side of the bottom wall (25) an upwardly directed wall section (26) for guiding fiber optic cables from the second bottom tray (15) to fiber optic modules, and at an opposite second side of the bottom wall (25) a downwardly directed wall section (27) for guiding fiber optic cables from the second bottom tray (14) to the second subspace (20b) of the first bottom tray (14).

11. The bottom tray assembly of claim 10, **characterized in that** the bottom wall (25) of the second bottom tray (15) comprises at the front an upwardly directed wall section (18).

12. A fiber optic distribution device (10) comprising a housing (11) and fiber optic modules mounted to the housing, **characterized by** bottom tray assembly (13) of one of claims 1 to 11.
